# EUROPÄISCHE PATENTSCHRIFT

(11) **EP 2 322 814 B1**
(45) Veröffentlichungstag und Bekanntmachung des Hinweises auf die Patenterteilung: **23.09.2015**
(21) Anmeldenummer: 10014278.5
(22) Anmeldetag: 04.11.2010
(51) Int. Cl.: F16B 7/18, F16B 2/06

(54) **Trägerklammer und Halteanordnung**
Girder clamp and holding assembly
Pince d'encrage et agencement de retenue

(30) Priorität: 17.11.2009 DE 102009053625
(43) Veröffentlichungstag der Anmeldung: 18.05.2011
(73) Patentinhaber: Sikla Holding GmbH, 4614 Marchtrenk (AT)
(72) Erfinder: Brugger, Günter, 78589 Dürbheim (DE)
(74) Vertreter: Börjes-Pestalozza, Henrich

(56) Entgegenhaltungen:
- DE-A1- 10 315 045
- DE-A1-102006 039 446

## Beschreibung

Die Erfindung betrifft eine Trägerklammer mit einem Haltearm und einem Klemmfuß, wobei der Klemmfuß mit dem Haltearm über einen Hals verbunden ist, welcher Hals in Gebrauchsstellung in eine längliche, hinterschnittene Öffnung eines Aufnahmeteils bringbar ist, und wobei der Klemmfuß in einer ersten Erstreckungsrichtung quer über die Breite des Halses mit wenigstens einem Überstand derart übersteht, dass mit dem wenigstens einen Überstand in Gebrauchsstellung die längliche, hinterschnittene Öffnung hintergreifbar ist, und wobei am Haltearm eine Klemmschraube angeordnet ist, welche zur klemmenden Fixierung der Trägerklammer mit dem Überstand des Klemmfußes zusammenwirkt.

Es ist bekannt, Trägerklammern für die Befestigung von Montageschienen oder dergleichen an einem Träger zu verwenden, welche aus mehreren Teilen, etwa Spannpratze, Gegenhalter, Schraube und Mutter, ausgebildet sind. Derartige Trägerklammern haben jedoch den Nachteil, dass bei der Montage eine Vielzahl von Einzelteilen zusammengebracht werden müssen, was die Montagezeit und den Montageaufwand unnötig erhöht.

Aus der DE 10 2006 039 446 A1 ist bereits eine Trägerklammer der eingangs erwähnten Art mit einem Haltearm vorbekannt, der über einen Hals mit einem Klemmfuß verbunden ist. Um die vorbekannte Trägerklammer an einer Montageschiene befestigen zu können, ist der Klemmfuß in eine an der Montageschiene vorgesehene Öffnung derart einsetzbar, dass der Klemmfuß mit einem über den Hals überstehenden Klemmfuß-Überstand den die Öffnung umgrenzenden Randbereich der Montageschiene hintergreifen kann. Die derart mit der Montageschiene verbundene Trägerklammer kann anschließend beispielsweise an einem T-Träger montiert werden, indem ein plattenförmiger Teilbereich des T-Trägers in den zwischen Haltearm und Klemmfuß verbliebenen Zwischenraum eingespannt und mittels einer Klemmschraube fixiert wird, die in einer Gewindeöffnung am Haltearm vorgesehen ist. Nachteilig ist jedoch, dass ein Entfernen der gelösten Trägerklammer aus der Öffnung einen komplexen Bewegungsablauf erfordert, welcher die Montage- oder Wartungsarbeit erschwert. Vor allem hält der Klemmfuß nicht sicher in der Halteschiene, weil die Fußbreite beschränkt ist, um den Kippvorgang zu ermöglichen, und es braucht eine Abstimmung in der Geometrie zwischen Klemmfuß und Schienenöffnung.

Aus der DE 103 15 045 A1 ist bereits ein Verbindungselement vorbekannt, das zur gleitenden Verbindung von zwei Profilstäben vorgesehen ist. Das vorbekannte Verbindungselement weist ein plattenförmiges Mittelstück auf, das an seinen beiden Flachseiten jeweils mit einem hammerkopfartigen Halteelement verbunden ist. Die Halteelemente sind in Längs- und in Querrichtung so dimensioniert, dass die Halteelemente in einer ersten Orientierung in die längliche Profilöffnung eines zugeordneten Profilstabes einführbar sind, um in einer gegenüber der ersten Orientierung gedrehten zweiten Orientierung die die Profilöffnung begrenzenden Randbereiche des Profilstabes fixierend zu untergreifen. Das aus DE 103 15 045 A1 vorbekannte Verbindungselement ist weder dazu bestimmt, noch dazu geeignet, eine Montageschiene an einem T-Träger zu montieren. Das vorbekannte Verbindungselement weist auch keine, an einem Haltearm angeordnete Klemmschraube auf, mit der das Trägerelement an einem T-Träger fixiert werden könnte.

Der Erfindung liegt die Aufgabe zugrunde, eine Trägerklammer der eingangs erwähnten Art zu schaffen, die eine einfache und sichere Handhabung ermöglicht.

Zur Lösung der Aufgabe ist bei einer Trägerklammer der eingangs genannten Art vorgesehen, dass der Klemmfuß in einer zweiten Erstreckungsrichtung, welche quer zur ersten Erstreckungsrichtung und quer zur Verlaufsrichtung des Halses ausgerichtet ist, eine Breite aufweist, die geringer als die durch den Überstand des Klemmfußes in der ersten Erstreckungsrichtung vorgegebene maximale Breite des Klemmfußes ist**,** sodass der Klemmfuß in einer ersten Orientierung in die längliche, hinterschnittene Öffnung einführbar und in einer zweiten, gegenüber der ersten Orientierung um die Verlaufsrichtung des Halses gedrehten Orientierung die längliche, hinterschnittene Öffnung hintergreifend fixierbar ist, und dass der Haltearm zwei quer zur Verlaufsrichtung des Halses von dem Haltearm abstehende Flügel mit jeweils einer Auflagekante aufweist, wobei die Auflagekanten in Gebrauchsstellung auf einem, die längliche hinterschnittene Öffnung berandenden Oberflächenbereich anliegen und wobei die Auflagenkanten U- oder V-förmig einen Winkel einschließen. Durch die beiden am Haltearm vorstehenden Flügel wird ein Verkippen in zwei schräg oder senkrecht aufeinander stehenden Richtungen verhindert. Dabei ist von Vorteil, dass die Trägerklammer bereits in Zwischenschritten der Montage nach dem Einsetzen des Klemmfußes in die Öffnung und vor der endgültigen Fixierung der Klemmschraube gegen ein Verkippen gesichert werden kann. Von Vorteil ist auch, dass die Trägerklammer zum Gebrauch mit ihrem Klemmfuß in eine längliche, hinterschnittene Öffnung eines Aufnahmeteils, beispielsweise einer Halteschiene, eingesetzt und mit einer einfachen Drehbewegung um die senkrecht auf der Öffnungsebene stehende Achse gedreht werden kann, sodass nach der Drehung der wenigstens eine Überstand die Öffnung hintergreift und die Trägerklammer gegen ein Herausfallen aus der Öffnung sichert. Die Trägerklammer kann somit als vormontierte Einheit mit Klemmschraube für ihre Verwendung bereitgehalten werden. Dies spart viel Zeit bei der Montage. Wird die erfindungsgemäße Trägerklemme zur Montage einer Halteschiene verwendet, indem der Klemmfuß auf der Schienenrückseite in ein Langloch eingeführt wird, so bietet die Erfindung den zusätzlichen Vorteil, dass kein Gegenhalter auf der offenen Schienenseite erforderlich ist. Der bei den bekannten, mehrteiligen Trägerklammern sonst von dem Gegenhalter benötigte Platz ist somit nicht mehr verbaut und steht zur Befestigung von weiteren Teilen, z.B. einer Rohrabhängung, zur Verfügung.

Es wird unter einem Hals ein Abschnitt eines Bauteils verstanden, welcher an wenigstens einem Ende durch eine schulterförmige Verdickung, welche den Überstand bildet, begrenzt wird.

Es kann vorgesehen sein, dass der Hals einen kreisrunden oder einen quadratischen Querschnitt quer zu seiner Verlaufsrichtung aufweist, um eine Drehbewegung in der Öffnung nicht zu behindern. Es sind jedoch auch ovale oder rechteckige oder andere Querschnitte vorsehbar.

Dadurch, dass die Wirklinie, also die Mittellinie, der Klemmschraube einen Abstand von dem Hals einhält, wird vermieden, dass sich die Trägerklammer bei einem Anziehen der Klemmschraube um den Hals mitdrehen kann, was ein Herausfallen des Klemmfußes aus der Öffnung zu Folge hätte. Somit ist die Handhabung nochmals verbessert.

Bei einer Ausgestaltung der Erfindung kann vorgesehen sein, dass der Klemmfuß ein Paar von Überständen aufweist, welche beidseits des Halses in der ersten Erstreckungsrichtung einander gegenüber liegend angeordnet sind. Von Vorteil ist dabei, dass die von der Klemmschraube aufgebrachte Klemmkraft von dem Klemmfuß gleichmäßig aufgenommen werden kann.

Ein einfaches Einführen des Klemmfußes in die Öffnung und Entnehmen desselben aus der Öffnung kann erreicht werden, wenn die Breite des Klemmfußes in der zweiten Erstreckungsrichtung gleich der Breite des Halses in dieser Erstreckungsrichtung im Anschluss an den Klemmfuß ist. Somit sind Vorsprünge oder Schultern vermieden, an welchen die Trägerklammer beim Einsetzen in die oder Entnehmen aus der Öffnung verhaken könnte.

Es kann vorgesehen sein, dass der Haltearm abgewinkelt ausgebildet ist, um günstige Kräfteverhältnisse zu erreichen. Hierbei kann die Verlaufsrichtung des freien Endes des Haltearms quer zu der ersten Erstreckungsrichtung angeordnet sein. Bevorzugt ist hierbei, dass die Verlaufsrichtung senkrecht zu der ersten Erstreckungsrichtung angeordnet ist. Von Vorteil ist dabei, dass der wenigstens eine Überstand ein Schwenkwiderlager für den Haltearm bildet.

Eine einfache Handhabbarkeit und einfache geometrische Verhältnisse können erreicht werden, wenn die erste Erstreckungsrichtung und die zweite Erstreckungsrichtung senkrecht aufeinander stehen.

Günstige Verhältnisse und vielfältige Einsatzmöglichkeiten können erreicht werden, wenn Flügel an der von der Klemmschraube oder deren Wirklinie abgewandten Seite des Haltearms ausgebildet sind.

Die Auflagekante der Flügel kann auch von einer Auflagefläche umfasst sein.

Es kann vorgesehen sein, dass an den Flügeln, insbesondere an der Auflagekante, jeweils an dem vom Haltearm abstehenden Ende eine Haltenase ausgebildet ist, mit welcher die Trägerklammer in Gebrauchstellung formschlüssig drehsicher im Bereich der länglichen, hinterschnittenen Öffnung fixierbar ist. Von Vorteil ist dabei, dass die Trägerklammer sich nicht bei bereits geringfügig gelockerter Klemmschraube aus der fixierten Position lösen kann.

Eine einfach fertigbare und vormontierbare Ausgestaltung der Erfindung kann vorsehen, dass der Haltearm, der Hals und der Klemmfuß einstückig miteinander verbunden sind.

Hierbei können der Haltearm, der Hals und der Klemmfuß einstückig aus einem Grundkörper als Gussteil gefertigt sein.

Es kann auch vorgesehen sein, dass der Haltearm, der Hals und der Klemmfuß aus einem Blechteil in einem Biegeverfahren hergestellt sind. Dieses Blechteil kann vorgestanzt ausgebildet sein.

Günstig ist es dabei, wenn wenigstens ein Ende des streifenförmigen oder länglichen, ungebogenen Blechteils den Klemmfuß bilden.

Besonders günstig ist es, wenn beide Enden den Klemmfuß bilden. Somit kann die von der Klemmschraube aufgebrachte Kraft von beiden Enden gleichermaßen auf den Randbereich der Öffnung abgeleitet werden.

Zur nochmaligen Erhöhung der Stabilität kann vorgesehen sein, dass das mit dem Klemmfuß verbundene Ende des Haltearms und/oder der Hals durch zwei parallele Abschnitte des Bleichteils gebildet sind, welche sich flächig berühren und/oder welche flächig miteinander verbunden sind.

Es kann vorgesehen sein, dass an dem Blechteil zwei Abschnitte mit jeweils zwei Flügeln ausgebildet sind, wobei die Abschnitte sich in fertig gebogener Form berühren und die Flügel eine im Querschnitt quer zur Verlaufsrichtung des Haltearms H-förmige oder X-förmige Anordnung bilden. Von Vorteil ist dabei, dass insbesondere während der Montage der Trägerklammer eine zweiseitige Abstützung in zwei unabhängigen Richtungen, welche durch die von dem Haltearm abstehenden Flügel vorgegeben sind, bewirkt werden kann.

Es kann vorgesehen sein, dass das Blechteil im Bereich der Klemmschraube in zwei voneinander beabstandeten Lagen geführt ist. Von Vorteil ist dabei, dass die von der Klemmschraube bei Gebrauch aufgebrachte Kraft von dem Haltearm aufgenommen werden kann, ohne dass sich dieser Halterarm verbiegt.

Beispielsweise können die Lagen am freien Ende des Haltearms miteinander verbunden sein. Hierdurch kann erreicht werden, dass die Lagen auch bei Belastung durch die Kraft der Klemmschraube einen festen Abstand zueinander einhalten. Besonders günstig ist es, wenn die Lagen am freien Ende des Haltearms durch einen gebogenen Abschnitt verbunden sind.

Günstig ist es dabei, wenn die Klemmschraube beide Lagen durchsetzt. Somit ergibt sich eine zusätzliche Aussteifung des Haltearms.

Die erfindungsgemäße Trägerklammer kann vorteilhaft eingesetzt werden bei einer Halteanordnung mit einer Halteschiene und wenigstens einer Trägerklammer, wobei die wenigstens eine Trägerklammer nach einem der vorangegangenen Ansprüche ausgebildet ist und die Halteschiene eine längliche, hinterschnittene Öffnung aufweist, welche der Klemmfuß der wenigstens einen Trägerklammer mit seinem Überstand in Gebrauchstellung hintergreift.

Die Erfindung wird nun anhand von Ausführungsbeispielen näher erläutert, ist aber nicht auf die Ausführungsbeispiele beschränkt. Weitere Ausführungsbeispiele ergeben sich durch Kombination einzelner oder mehrerer Merkmale der Ansprüche untereinander und/oder mit einzelnen oder mehreren Merkmalen der Ausführungsbeispiele.

Es zeigt
- Fig. 1: eine erfindungsgemäße Trägerklammer in einer Ansicht von vorn,
- Fig. 2: die Trägerklammer gemäß Fig. 1 in einer Seitenansicht,
- Fig. 3: die Trägerklammer gemäß Fig. 1 in einer Draufsicht,
- Fig. 4: die Trägerklammer gemäß Fig. 1 in einer dreidimensionalen Schrägansicht,
- Fig. 5: eine weitere erfindungsgemäße Trägerklammer in einer Ansicht von vorn,
- Fig. 6: die Trägerklammer gemäß Fig. 5 in einer Seitenansicht,
- Fig. 7: die Trägerklammer gemäß Fig. 5 in einer dreidimensionalen Schrägansicht,
- Fig. 8: eine dritte erfindungsgemäße Trägerklammer in einer Seitenansicht,
- Fig. 9: die Trägerklammer gemäß Fig. 8 in einer Ansicht von hinten,
- Fig. 10: die Trägerklammer gemäß Fig. 8 in einer dreidimensionalen Schrägansicht,
- Fig. 11: die Trägerklammer gemäß Fig. 8 in Gebrauchsstellung an einem Aufnahmeteil in einer Ansicht von hinten,
- Fig. 12: eine erfindungsgemäße Halteanordnung und
- Fig. 13: die Halteanordnung gemäß Fig. 12 in einer dreidimensionalen Schrägansicht.

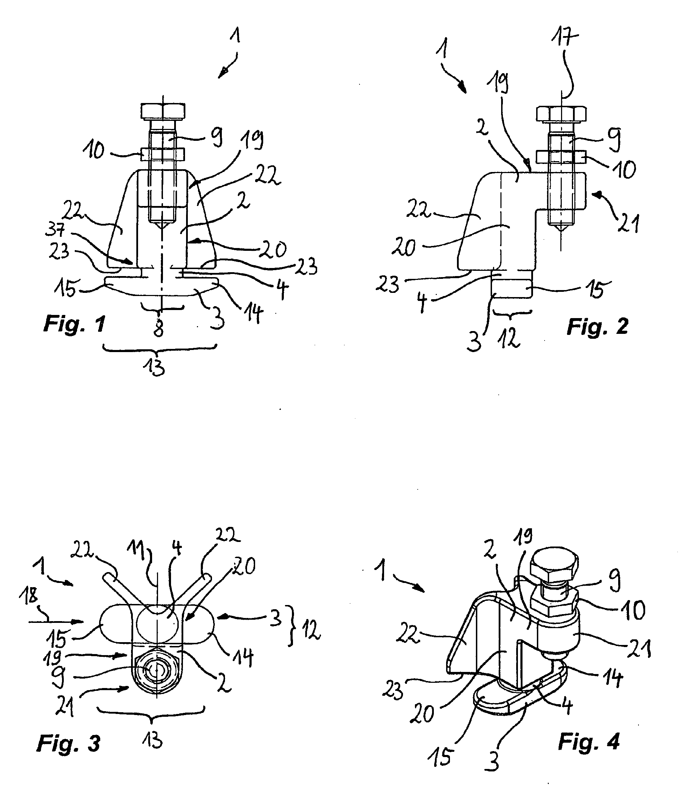

Figuren 1 bis 4 zeigen eine im Ganzen mit 1 bezeichnete Trägerklammer in unterschiedlichen Ansichten.

Die Trägerklammer 1 hat einen Haltearm 2 und einen Klemmfuß 3, die über einen Hals 4 miteinander verbunden sind.

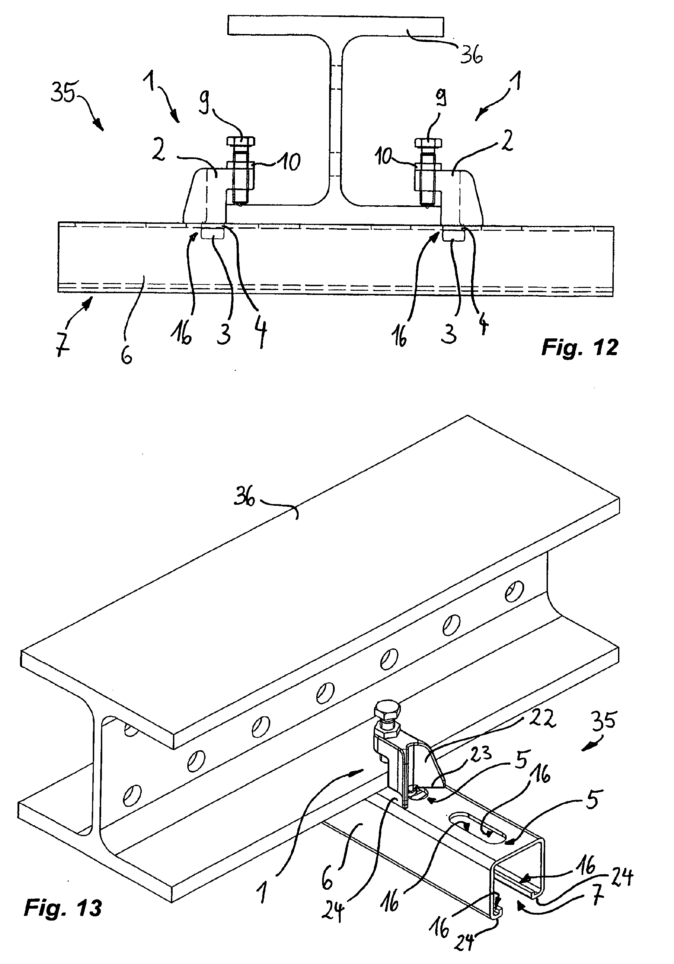

Figur 13 zeigt die Trägerklammer 1 in Gebrauchsstellung, wobei der Hals 4 in eine längliche, hinterschnittene Öffnung 5 eines als Halteschiene ausgebildeten Aufnahmeteils 6 eingebracht oder eingesetzt ist.

Alternativ kann die Trägerklammer 1 auch in die in Figur 13 an der Unterseite des Aufnahmeteils 6 ausgebildete Schienenöffnung 7, welche ebenfalls eine längliche, hinterschnittene Öffnung bildet, eingesetzt werden. Dieses Ausführungsbeispiel betrifft den hier nicht dargestellten Fall, dass die Montageschiene um 180° gedreht wird, das heißt mit der offenen Schienenseite zum Doppel-T-Träger zeigt.

Insbesondere in Figur 1 ist zu erkennen, dass der Klemmfuß 3 in einer ersten Erstreckungsrichtung, welche in Figur 1 in der Zeichenebene angeordnet ist, quer über die Breite 8 des Halses 4 übersteht.

Somit hintergreift der Klemmfuß 3 in der in Figur 13 gezeigten Gebrauchsstellung die hinterschnittene Öffnung 5 beziehungsweise 7.

An dem Haltearm 2 ist eine Klemmschraube 9 in einer Gewindebohrung angeordnet, mit welcher die Trägerklammer 1 in Gebrauchsstellung festgeklemmt werden kann.

An der Klemmschraube 9 ist eine Anschlag- oder Kontermutter 10 angeordnet, um ein Lockern der Klemmschraube 9 zu erschweren.

Wie insbesondere aus Figur 2 und Figur 3 ersichtlich ist, weist der Klemmfuß 3 in einer zweiten Erstreckungsrichtung 11 eine Breite 12 auf, welche geringer ist als die maximale Breite 13 des Klemmfußes 3 in der ersten Erstreckungsrichtung, durch welche der Überstand 14, 15 des Klemmfußes 3 über den Hals 4 gebildet wird.

In Figur 3 ist deutlich ersichtlich, dass hierdurch der Klemmfuß 3 eine Grundform aufweist, die quer zur Verlaufsrichtung des Halses 4, also in Figur 3 in der Zeichenebene, eine minimale Breite 12 und eine maximale Breite 13 aufweist.

Somit kann die Trägerklammer 1 mit ihrem Klemmfuß 3 in einer Orientierung in eine längliche Öffnung, beispielsweise in die Öffnung 5 oder die Schienenöffnung 7 aus Figur 13, eingeführt werden.

Da die Öffnungen 5, 7 mit einem Hinterschnitt 16 ausgebildet sind, wobei die axiale Länge des Halses 4 entlang dessen Verlaufsrichtung auf die Materialdicke beziehungsweise die Höhe der Schienenumkantung des Aufnahmeteils 6 im Bereich der Öffnung 5, 7 abgestimmt ist, kann die Trägerklammer 1 anschließend um eine Drehachse, welche senkrecht auf der durch die Öffnung 5 beziehungsweise 7 gegebene Ebene steht und durch den Hals 4 verläuft und dessen Achse bildet, um einen Winkel von 90° gedreht werden, wodurch der Klemmfuß 3 mit seinen Überständen 4, 15 die Öffnung 5, 7 hintergreift.

Aus Figur 2 ist ferner ersichtlich, dass die Wirklinie 17 der Klemmschraube 9 von dem Hals 4 beabstandet verläuft, so dass bei einem Anziehen der Klemmschraube 9 das auf den Haltearm 2 eingebrachte Gegendrehmoment von dem versetzt zu der Wirklinie 17 in der Öffnung 5, 7 angeordneten Hals 4 aufgenommen werden kann.

Wie in Figur 3 ersichtlich ist, sind die Überstände 14, 15 des Klemmfußes 3 in der ersten Erstreckungsrichtung 18 einander gegenüberliegend beidseits des Halses 4 angeordnet und bilden somit ein Paar von Überständen 14, 15.

Es ist ferner ersichtlich, dass die Breite 12 des Klemmfußes 3 gleich der Breite 8 des Halses 4 in der zweiten Erstreckungsrichtung 11 ist, so dass der Klemmfuß 3 in einer Orientierung ohne Verhaken in eine Öffnung 5 hineingeführt und aus dieser herausgeführt werden kann.

Bei dem Ausführungsbeispiel gemäß Figur 1 bis Figur 4 ist der Hals 4 mit kreisrundem Querschnitt und der Klemmfuß 3 mit ovalem Querschnitt ausgebildet.

Der Haltearm 2 ist abgewinkelt ausgebildet und weist einen ersten Schenkel 19 und einen zweiten Schenkel 20 auf. An dem freien Ende 21 des ersten Schenkels 19 ist die Klemmschraube 9 angeordnet. Der zweite Schenkel 20 ist an seinem Ende 37 über den Hals 4 mit dem Klemmfuß 3 verbunden.

In Figur 3 ist ersichtlich, dass die Verlaufsrichtung des ersten Schenkels 19 und des freien Endes 21 mit der zweiten Erstreckungsrichtung 11 zusammenfällt und senkrecht auf der ersten Erstreckungsrichtung 18 angeordnet ist.

Somit bildet das Paar der Überstände 14, 15 in Gebrauchsstellung ein Schwenkwiderlager für ein Schwenken der Trägerklammer 1 um die durch die erste Erstreckungsrichtung 18 vorgegebene Achse, beispielsweise wenn die Klemmschraube 9 angezogen oder gelockert wird.

Erste Erstreckungsrichtung 18 und zweite Erstreckungsrichtung 11 stehen ebenfalls senkrecht aufeinander. Bei weiteren, hier nicht gezeigten Ausführungsbeispielen schließen diese Richtungen 11, 18 einen spitzen oder stumpfen Winkel ein.

An der von der Klemmschraube 9 abgewandten Seite des Haltearmes 2 sind an dem Haltearm 2 zwei Flügel 22 ausgebildet, welche quer zur Verlaufsrichtung des Halses 4 von dem Haltearm 2 abstehen.

An der Unterseite der Flügel 22 ist jeweils eine Auflagekante 23 ausgebildet, welche in Gebrauchsstellung auf einem Oberflächenbereich 24 aufliegt, welcher die Öffnung 5 beziehungsweise die Schienenöffnung 7 berandet, vgl. Figur 13.

In Figur 3 ist noch ersichtlich, dass die Flügel 22 V-förmig einen Winkel einschließen, um ein Verkippen der Trägerklammer 1 in teilweise fixierter Gebrauchsstellung in zwei Richtungen zu verhindern.

Bei der Trägerklammer 1 gemäß Figur 1 bis Figur 4 sind Haltearm 2, Klemmfuß 3, Hals 4 und Flügel 22 einstückig aus einem Gusskörper hergestellt.

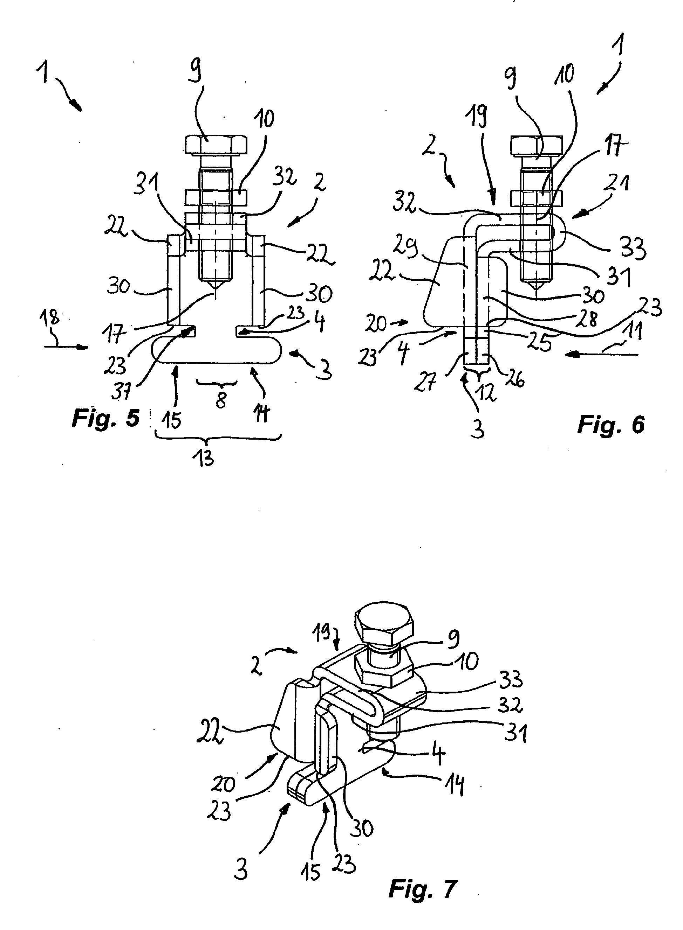

Figur 5 bis Figur 7 zeigen ein weiteres Ausführungsbeispiel einer erfindungsgemäßen Trägerklammer 1 in unterschiedlichen Ansichten.

Bei diesem Ausführungsbeispiel sind konstruktiv und/oder funktionell gleiche Bestandteile wie bei dem Ausführungsbeispiel gemäß Figur 1 bis Figur 4 mit denselben Bezugszeichen bezeichnet und werden hier nicht noch einmal gesondert beschrieben. Es gelten die vorstehenden Ausführungen entsprechend.

Die Trägerklammer 1 gemäß Figur 5 bis 7 unterscheidet sich von der Trägerklammer gemäß Figur 1 bis 4 dadurch, dass sie aus einem vorgestanzten Blechteil 25 in einem Biegeverfahren hergestellt ist.

Dieses im ungebogenen Zustand streifenförmig-längliche Blechteil 25 ist mit zwei Enden 26, 27 versehen, welche den Klemmfuß 3 bilden.

An diesen Klemmfuß 3 schließen sich zwei ebene Abschnitte 28, 29 an, die parallel geführt sind und sich flächig berühren.

Durch diese Abschnitte 28, 29 sind der Hals 4 und der zweite Schenkel 20 des abgewinkelten Haltearms 2 gebildet. An den Abschnitten 28, 29 sind seitlich jeweils Flügel 22, 30 ausgebildet und abgebogen, so dass sich insgesamt eine H-förmige Anordnung quer zur Verlaufsrichtung des zweiten Schenkels 20 des Haltearms 2 ergibt.

Es sind auf diese Weise auch durch veränderte Biegewinkel und Ansatzpunkte der aussteifenden Flügel 22, 30 auch X-förmige Anordnungen bildbar.

Im Bereich des ersten Schenkels 19 des abgewinkelten Haltearms 2 sind zwei Lagen 31, 32 des Blechteils 25 parallel und in einem Abstand zueinander angeordnet und geführt und am freien Ende 21 des ersten Schenkels 19 durch einen gebogenen Abschnitt 33 verbunden.

Die Klemmschraube 9 durchsetzt diese beiden parallelen Lagen 31, 32 derart, dass die Wirklinie 17 der Klemmschraube 9 senkrecht auf den Lagen 31, 32 steht.

Bei dem Ausführungsbeispiel gemäß Figur 5 bis Figur 7 sind die Breite 8 des Halses 4 in der ersten Erstreckungsrichtung und die Materialdicke des Blechteils 25 so gewählt und aufeinander abgestimmt, dass die Breite des Halses 4 in der zweiten Erstreckungsrichtung und des Klemmfußes 3 in der zweiten Erstreckungsrichtung geringer sind als die Breite 8 des Halses 4 in der ersten Erstreckungsrichtung, vgl. Figur 5 und Figur 6.

Auch hier ist die Breite 12 des Klemmfußes 3 in der zweiten Erstreckungsrichtung, welche in Figur 6 in der Zeichenebene liegt, gleich der Breite des Halses 4 in dieser Erstreckungsrichtung.

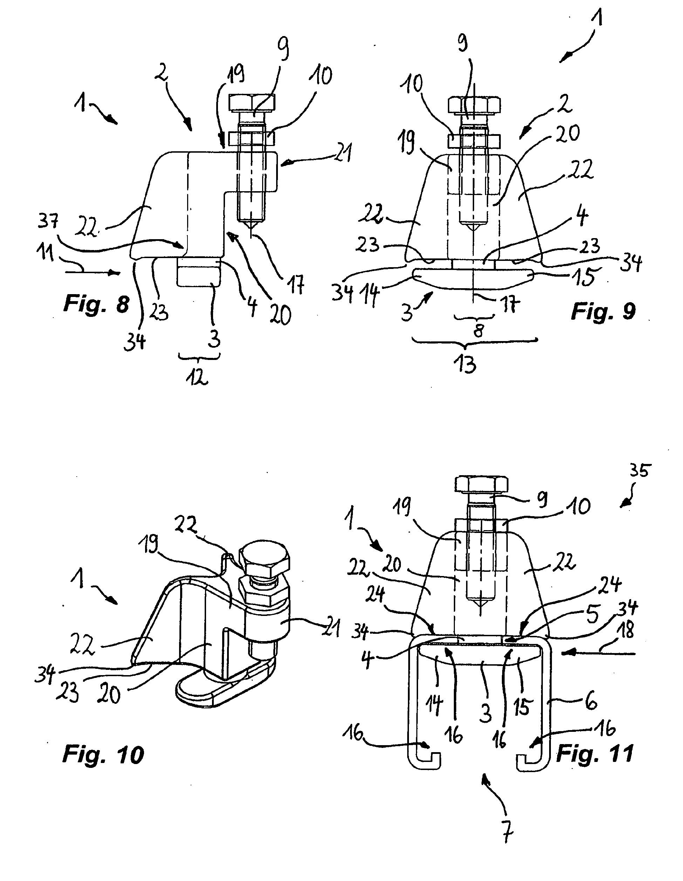

Figur 8 bis Figur 11 zeigen ein drittes Ausführungsbeispiel einer erfindungsgemäßen Trägerklammer 1 in unterschiedlichen Ansichten, wobei Figur 11 eine Gebrauchsstellung der Trägerklammer 1 wiedergibt.

Wieder sind funktionell und/oder konstruktiv gleichartige Teile der Trägerklammer 1 mit den zu den vorangegangenen Ausführungsbeispielen verwendeten Bezugszeichen bezeichnet und nicht noch einmal gesondert beschrieben. Die vorstehenden Ausführungen gelten daher sinngemäß auch für dieses Ausführungsbeispiel.

Die Trägerklammer 1 ist bei diesem Ausführungsbeispiel wie bei dem Ausführungsbeispiel gemäß Figur 1 bis Figur 4 aus einem Gussteil gefertigt, in welches eine Klemmschraube 9 eingeschraubt ist.

Das Ausführungsbeispiel gemäß Figur 8 bis Figur 11 unterscheidet sich von demjenigen gemäß Figur 1 bis Figur 4 zunächst dadurch, dass die durch die Flügel 22 maximal aufgespannte Breite größer ist als die maximale Breite 13 des Klemmfußes 3, während bei dem Ausführungsbeispiel gemäß Figur 1 bis Figur 4 diese Breiten gleich groß gewählt sind.

Ferner ist an dem von dem Halterarm 2 abstehenden Ende der Anlagekante 23 der Flügel 22 jeweils eine Haltenase 34 ausgebildet, welche über den Verlauf der Anlagekante 23 zum Klemmfuß 3 hin übersteht.

Wie in Figur 11 ersichtlich ist, umgreift in Gebrauchsstellung jede dieser Haltenasen 34 eine an einer Kante des Aufnahmeteils 6 ausgebildete Rundung teilweise und sichert damit die Trägerklammer 1 in montierter Position gegen ein Verdrehen um den Hals 4.

Figuren 12 und Figuren 13 zeigen die Verwendung einer erfindungsgemäßen Trägerklammer 1 in einer im Ganzen mit 35 bezeichneten erfindungsgemäßen Halteanordnung in unterschiedlichen Ansichten.

Die Halteanordnung 35 hat zwei Trägerklammern 1, die an einem als Montageschiene ausgebildeten Aufnahmeteil 6 angeordnet sind und einen Doppel-T-Träger 36 umgreifen.

Die Hälse 4 der Trägerklammern 1 sind dabei jeweils in einer als Langloch ausgebildeten länglichen, hinterschnittenen Öffnung 5 angeordnet, wobei die Klemmfüße 3 diese Öffnungen 5 an den Hinterschnitten 16 umgreifen.

Durch ein Anziehen der Klemmschraube 9 wird eine Kraft auf den Doppel-T-Träger 36 aufgebracht, indem die Klemmschraube 9 mit dem Klemmfuß 3 zusammenwirkt.

Somit ist die Montageschiene 6 an dem Doppel-T-Träger 36 gehalten und fixiert.

Anstatt des in Figur 12 und Figur 13 gezeigten Ausführungsbeispiels einer erfindungsgemäßen Trägerklammer 1 gemäß Figur 1 bis Figur 4 sind auch die übrigen Ausführungsbeispiele in gleicher Weise verwendbar.

Bei den gezeigten Ausführungsbeispielen gemäß Figur 1 bis Figur 13 beträgt die Breite 8 des Halses 4 ein Drittel oder weniger als ein Drittel der maximalen Breite 13 des Klemmfußes 3. Es sind jedoch auch andere Zahlenverhältnisse bei weiteren Ausführungsbeispielen realisierbar.

Bei der Trägerklammer 1 ist ein Haltearm 2 vorgesehen, welcher an seinem einen Ende 37 über einen Hals 4 mit einem Klemmfuß 3 verbunden ist und welcher an seinem anderen Ende 21 eine Klemmschraube 9 aufweist, welche zum Klemmen in Gebrauchsstellung mit dem Klemmfuß 3 zusammenwirkt. Es wird vorgeschlagen, dass der Klemmfuß 3 in einer ersten Erstreckungsrichtung 18 über die Breite 8 des Halses 4 übersteht und somit Überstände 14, 15 bildet, welche in Gebrauchsstellung den Hinterschnitt 16 einer Öffnung 5 hintergreifen, und dass der Klemmfuß 3 quer zu diesen Erstreckungsrichtung 18 eine geringere Breite aufweist, als in der ersten Erstreckungsrichtung 18, so dass der Klemmfuß 3 in eine längliche, hinterschnitte Öffnung 5, 7 einführbar und durch eine Drehbewegung um eine durch den Hals 4 verlaufende Achse in eine die Öffnung 5, 7 hintergreifende Position bringbar ist.

**/ Ansprüche**

## Patentansprüche

1. Trägerklammer (1) mit einem Haltearm (2) und einem Klemmfuß (3), wobei der Klemmfuß (3) mit dem Haltearm (2) über einen Hals (4) verbunden ist, welcher Hals (4) in Gebrauchsstellung in eine längliche, hinterschnittene Öffnung (5, 7) eines Aufnahmeteils (6) bringbar ist, und wobei der Klemmfuß (3) in einer ersten Erstreckungsrichtung (18) quer über die Breite (8) des Halses (4) mit wenigstens einem Überstand (14, 15) derart übersteht, dass mit dem wenigstens einen Überstand (14, 15) in Gebrauchsstellung die längliche, hinterschnittene Öffnung (5, 7) hintergreifbar ist, und wobei am Haltearm (2) eine Klemmschraube (9) angeordnet ist, welche zur klemmenden Fixierung der Trägerklammer (1) mit dem Überstand (14, 15) des Klemmfußes (3) zusammenwirkt, **dadurch gekennzeichnet, dass** der Klemmfuß (3) in einer zweiten Erstreckungsrichtung (11), welche quer zur ersten Erstreckungsrichtung (18) und quer zur Verlaufsrichtung des Halses (4) ausgerichtet ist, eine Breite (12) aufweist, die geringer als die durch den Überstand (14, 15) des Klemmfußes (3) in der ersten Erstreckungsrichtung (18) vorgegebene maximale Breite (13) des Klemmfußes (3) ist, so dass der Klemmfuss (3) in einer ersten Orientierung in die längliche, hinterschnittene Öffnung (5, 7) einführbar und in einer zweiten, gegenüber der ersten Orientierung um die Verlaufsrichtung des Halses (4) gedrehten Orientierung die längliche, hinterschnittene Öffnung (5, 7) hintergreifend fixierbar ist, und dass der Haltearm (2) zwei quer zur Verlaufsrichtung des Halses (4) von dem Haltearm (2) abstehende Flügel (22, 30) mit jeweils einer Auflagekante (23) aufweist, wobei die Auflagekanten (23) in Gebrauchsstellung auf einem, die längliche hinterschnittene Öffnung (5, 7) berandenden Oberflächenbereich (24) anliegen und wobei die Auflagekanten (23) U- oder V-förmig einen Winkel einschließen.

2. Trägerklammer (1) nach Anspruch 1, **dadurch gekennzeichnet, dass** der Klemmfuß (3) ein Paar von Überständen (14, 15) aufweist, welche beidseits des Halses (4) in der ersten Erstreckungsrichtung (18) einander gegenüber liegend angeordnet sind.

3. Trägerklammer (1) nach Anspruch 1 oder 2, **dadurch gekennzeichnet, dass** die Breite (12) des Klemmfußes (3) in der zweiten Erstreckungsrichtung (11) gleich der Breite des Halses (4) in dieser Erstreckungsrichtung (11) ist.

4. Trägerklammer nach einem der Ansprüche 1 bis 3, **dadurch gekennzeichnet, dass** der Haltearm (2) abgewinkelt ausgebildet ist, wobei insbesondere die Verlaufsrichtung des freien Endes (21) quer, insbesondere senkrecht, zu der ersten Erstreckungsrichtung (18) angeordnet ist.

5. Trägerklammer (1) nach einem der Ansprüche 1 bis 4, **dadurch gekennzeichnet, dass** die erste Erstreckungsrichtung (18) und die zweite Erstreckungsrichtung (11) senkrecht aufeinander stehen.

6. Trägerklammer (1) nach einem der Ansprüche 1 bis 5, **dadurch gekennzeichnet, dass** an den Flügeln (22, 30), insbesondere an der Auflagekante (23), jeweils an dem vom Haltearm (2) abstehenden Ende eine Haltenase (34) ausgebildet ist, mit welcher die Trägerklammer (1) in Gebrauchstellung formschlüssig drehsicher im Bereich (24) der länglichen, hinterschnittenen Öffnung fixierbar ist.

7. Trägerklammer nach einem der Ansprüche 1 bis 6, **dadurch gekennzeichnet, dass** der Haltearm (2), der Hals (4) und der Klemmfuß (3) einstückig miteinander verbunden sind, wobei insbesondere der Haltearm (2), der Hals (4) und der Klemmfuß (3) einstückig aus einem Grundkörper als Gussteil gefertigt ist oder wobei der Haltearm (2), der Hals (4) und der Klemmfuß (3) aus einem vorzugsweise vorgestanzten Blechteil (25) in einem Biegeverfahren hergestellt sind, wobei insbesondere wenigstens ein Ende (26, 27) oder beide Enden des streifenförmigen Blechteils (25) den Klemmfuß (3) bilden.

8. Halteanordnung (35) mit einer Halteschiene (6) und wenigstens einer Trägerklammer (1), wobei die wenigstens eine Trägerklammer (1) nach einem der vorangegangenen Ansprüche ausgebildet ist und die Halteschiene (6) eine längliche, hinterschnittene Öffnung (5, 7) aufweist, welche der Klemmfuß (3) der wenigstens einen Trägerklammer (1) mit seinem Überstand (14, 15) in Gebrauchstellung hintergreift.

## Claims

1. Girder clamp (1) having a holding arm (2) and a clamping foot (3), wherein the clamping foot (3) is connected to the holding arm (2) via a neck (4), which neck (4) can be inserted in the usage position into an elongate undercut opening (5, 7) in a receiving part (6), and wherein, in a first extension direction (18), the clamping foot (3) protrudes transversely beyond the width (8) of the neck (4) with at least one projection (14, 15) in such a way that it is possible to engage behind the elongate undercut opening (5, 7) with the at least one projection (14, 15) in the usage position, and wherein a clamping screw (9) is disposed on the holding arm (2) and cooperates with the projection (14, 15) of the clamping foot (3) in order to fix the girder clamp (1) in a clamping manner, **characterised in that**, in a second extension direction (11) which is oriented transversely to the first extension direction (18) and transversely to the direction in which the neck (4) runs, the clamping foot (3) has a width (12) which is smaller than the maximum width (13) of the clamping foot (3) preset in the first extension direction (18) by the projection (14, 15) of the clamping foot (3), and so the clamping foot (3) can be introduced, in a first orientation, into the elongate undercut opening (5, 7) and, in a second orientation rotated with respect to the first orientation about the direction in which the neck (4) runs, the elongate undercut opening (5, 7) can be fixed by engagement from behind, and that the holding arm (2) has two wings (22, 30) standing out from the holding arm (2) transversely to the direction in which the neck (4) runs, each wing having a contact edge (23), wherein, in the usage position, the contact edges (23) lie on a surface region (24) bounding the elongate undercut opening (5, 7), and wherein the contact edges (23) enclose an angle by forming a U shape or a V shape.

2. Girder clamp (1) as claimed in claim 1, **characterised in that** the clamping foot (3) has a pair of projections (14, 15) which are disposed opposite one another on both sides of the neck (4) in the first extension direction (18).

3. Girder clamp (1) as claimed in claim 1 or 2, **characterised in that** the width (12) of the clamping foot (3) in the second extension direction (11) is equal to the width of the neck (4) in this extension direction (11).

4. Girder clamp as claimed in any one of claims 1 to 3, **characterised in that** the holding arm (2) is bent, wherein in particular the direction in which the free end (21) runs is transverse, in particular perpendicular, to the first extension direction (18).

5. Girder clamp (1) as claimed in any one of claims 1 to 4, **characterised in that** the first extension direction (18) and the second extension direction (11) are perpendicular to one another.

6. Girder clamp (1) as claimed in any one of claims 1 to 5, **characterised in that** on the wings (22, 30), in particular on the contact edge (23), in each case on the end standing out from the holding arm (2) a holding lug (34) is formed with which the girder clamp (1) can be fixed in the usage position in a form-fit manner secured against rotation in the region (24) of the elongate undercut opening.

7. Girder clamp as claimed in any one of claims 1 to 6 **characterised in that** the holding arm (2), the neck (4) and the clamping foot (3) are connected as one piece with one another, wherein in particular the holding arm (2), the neck (4) and the clamping foot (3) are produced as one piece from a main body as a cast part or wherein the holding arm (2), the neck (4) and the clamping foot (3) are produced from a preferably prestamped sheet metal part (25) in a bending process, wherein in particular at least one end (26, 27) or both ends of the strip-like sheet metal part (25) form the clamping foot (3).

8. Holding arrangement (35) having a holding rail (6) and at least one girder clamp (1), wherein the at least one girder clamp (1) is formed as claimed in any one of the preceding claims and the holding rail (6) has an elongate undercut opening (5, 7) which the clamping foot (3) of the at least one girder clamp (1) engages behind with its projection (14, 15) in the usage position.

## Revendications

1. Pince d'ancrage (1) avec un bras de retenue (2) et un pied de serrage (3), dans laquelle le pied de serrage (3) est relié au bras de retenue (2) par un col (4), col (4) qui peut être amené en position d'utilisation dans une ouverture allongée à contre-dépouille (5, 7) d'une pièce de réception (6), et dans laquelle le pied de serrage (3) est saillant dans une première direction d'extension (18) transversalement sur la largeur (8) du col (4) avec au moins un débordement (14, 15), de telle manière que l'ouverture allongée à contre-dépouille (5, 7) puisse être accrochée à l'arrière par ledit au moins un débordement (14, 15) en position d'utilisation, et dans laquelle une vis de serrage (9) est disposée sur le bras de retenue (2), laquelle coopère avec le débordement (14, 15) du pied de serrage (3) pour la fixation par serrage de la pince d'ancrage (1), **caractérisée en ce que** le pied de serrage (3) présente, dans une deuxième direction d'extension (11), qui est orientée transversalement à la première direction d'extension (18) et transversalement à la direction du tracé du col (4), une largeur (12) qui est plus petite que la largeur maximale (13) du pied de serrage (3) prédéterminée par le débordement (14, 15) du pied de serrage (3), de telle manière que le pied de serrage (3) puisse être introduit dans une première orientation dans l'ouverture allongée à contre-dépouille (5, 7) et puisse être fixé en s'accrochant par l'arrière à l'ouverture allongée à contre-dépouille (5, 7) dans une deuxième orientation tournée par rapport à la première orientation autour de la direction du tracé du col (4), et **en ce que** le bras de retenue (2) présente deux ailettes (22, 30) pourvues respectivement d'une arête d'appui saillantes du bras de retenue (2) transversalement à la direction du tracé du col (4), dans laquelle les arêtes d'appui (23) reposent en position d'utilisation sur une région de surface (24) bordant l'ouverture allongée à contre-dépouille (5, 7) et dans laquelle les arêtes d'appui (23) forment un angle en forme de U ou en forme de V.

2. Pince d'ancrage (1) selon la revendication 1, **caractérisée en ce que** le pied de serrage (3) présente une paire de débordements (14, 15), lesquels sont disposés de part et d'autre du col (4) l'un en face de l'autre dans la première direction d'extension (18).

3. Pince d'ancrage (1) selon la revendication 1 ou 2, **caractérisée en ce que** la largeur (12) du pied de serrage (3) dans la deuxième direction d'extension (11) est égale à la largeur du col (4) dans cette direction d'extension (11).

4. Pince d'ancrage selon l'une quelconque des revendications 1 à 3, **caractérisée en ce que** le bras de retenue (2) est de forme coudée, dans laquelle, en particulier, la direction du tracé de l'extrémité libre (21) est disposée transversalement, en particulier perpendiculairement à la première direction d'extension (18).

5. Pince d'ancrage (1) selon l'une quelconque des revendications 1 à 4, **caractérisée en ce que** la première direction d'extension (18) et la deuxième direction d'extension (11) sont perpendiculaires l'une à l'autre.

6. Pince d'ancrage (1) selon l'une quelconque des revendications 1 à 5, **caractérisée en ce qu'**un ergot de retenue (34) est formé sur les ailettes (22, 30), en particulier sur l'arête d'appui (23), respectivement sur l'extrémité saillante à partir du bras de retenue (2), ergot avec lequel la pince d'ancrage (1) peut être fixée en position d'utilisation par emboîtement sans rotation dans la région (24) de l'ouverture allongée à contre-dépouille.

7. Pince d'ancrage selon l'une quelconque des revendications 1 à 6, **caractérisée en ce que** le bras de retenue (2), le col (4) et le pied de serrage (3) sont assemblés l'un à l'autre en une seule pièce, dans laquelle en particulier le bras de retenue (2), le col (4) et le pied de serrage (3) sont fabriqués en une seule pièce à partir d'un corps de base sous forme de pièce moulée ou dans laquelle le bras de retenue (2), le col (4) et le pied de serrage (3) sont fabriqués par un procédé de pliage à partir d'une pièce de tôle de préférence préalablement découpée (25), dans laquelle en particulier au moins une extrémité (26, 27) ou les deux extrémités de la pièce de tôle en forme de bande (25) forment le pied de serrage (3).

8. Agencement de retenue (35) avec un rail de retenue (6) et au moins une pince d'ancrage (1), dans lequel ladite au moins une pince d'ancrage (1) est réalisée selon l'une quelconque des revendications précédentes et le rail de retenue (6) présente une ouverture allongée à contre-dépouille (5, 7), que le pied de serrage (3) de ladite au moins une pince d'ancrage (1) accroche par l'arrière en position d'utilisation avec son débordement (14, 15).
